Europäisches Patentamt

European Patent Office

Office européen des brevets

(19)

(11) Veröffentlichungsnummer: **0 496 992 A1**

# (12) EUROPÄISCHE PATENTANMELDUNG

(21) Anmeldenummer: **91121668.7**

(22) Anmeldetag: **18.12.91**

(51) Int. Cl.5: **B65G 1/00, B65G 47/52**

(30) Priorität: **30.01.91 DE 4102654**

(43) Veröffentlichungstag der Anmeldung:
**05.08.92 Patentblatt 92/32**

(84) Benannte Vertragsstaaten:
**AT BE CH DE DK ES FR GB GR IT LI LU NL SE**

(71) Anmelder: **ADOLF KLINKHAMMER
FÖRDERANLAGEN
Wiesbadener Strasse 21**
**W-8500 Nürnberg(DE)**

(72) Erfinder: **Wiske, Ulrich
Kurt-Schumacher-Strasse 40
W-08507 Oberasbach(DE)**

(74) Vertreter: **Patentanwälte Czowalla . Matschkur
& Partner
Dr.-Kurt-Schumacher-Strasse 23
W-8500 Nürnberg 1(DE)**

(54) **Tablar-Be- und -Entladevorrichtung.**

(57) Be- und Entladevorrichtung für im wesentlichen wannenförmige Tablare (12) in Förder- und Lagersystemen, wobei die Tablar-Entladestation (2) und die Tablar-Beladestation (3) durch einen taktgesteuerten Kettenumlauf (4) mit, Schlitze (17a,17b) des Tablarbodens (13) durchsetzenden, die Seitenwände (14,15) der Tablare (12) überragenden Auflagestegen (11) als Tablarträger verbunden sind, und die beidends an den Kettenumlauf (4) anschließenden, als Riemen- oder Kettenförderer (9) ausgebildeten und synchron mit dem Kettenumlauf angetriebenen Förderstrecken (9,5) sich in einem Übergabeabschnitt (2,3), in welchem eine vertikale Übergabebewegung stattfindet, seitlich über den Kettenumlauf (4) erstrecken.

FIG. 3

EP 0 496 992 A1

Die Erfindung bezieht sich auf eine Be- und Entladevorrichtung für im wesentlichen wannenförmige Tablare in Förder- und Lagersystemen.

In Förder- und Lagersystemen, bei denen das Fördergut, beispielsweise in Form von Paketen, auf Tablaren angeliefert und gelagert wird, besteht ein ganz erhebliches Problem darin, wie die aus dem Lager abgerufenen Tablare am zweckmäßigsten entladen werden und wie andererseits das Fördergut, also beispielsweise die Pakete, in der Beladestation möglichst einfach auf leere Tablare zur weiteren Bearbeitung und Lagerung aufgebracht werden können. Besonders kompliziert wird dieses Problem noch dadurch, daß solche Tablare möglichst wannenförmig mit einem umlaufenden Seitenrand ausgebildet sein sollen, um die Gefahr eines Abrutschens des Förderguts von den Tablaren sicher zu verhindern. Der Rand erschwert aber ersichtlich das Aufbringen und Abnehmen des Förderguts, vor allem wenn es automatisiert und nicht von Hand erfolgen soll.

Der Erfindung liegt daher die Aufgabe zugrunde, eine Tablar-Be- und -Entladevorrichtung für derartige wannenförmige Tablare zu schaffen, die ein einfaches automatisches Abnehmen des Guts von den Tablaren und auch Beladen der Tablare mit Fördergut ermöglicht, und zwar möglichst unabhängig davon, wie das als Stückgut ausgebildete Fördergut im einzelnen beschaffen ist.

Zur Lösung dieser Aufgabe ist erfindungsgemäß vorgesehen, daß die Tablar-Entladestation und die Tablar-Beladestation durch einen taktgesteuerten Kettenumlauf mit Schlitze des Tablarbodens durchsetzenden, die Seitenwände der Tablare überragenden Auflagestegen als Tablarträger verbunden sind, und daß die beidends an den Kettenumlauf anschließenden, als Riemen- oder Kettenförderer ausgebildeten, synchron mit dem Kettenumlauf angetriebenen Förderstrecken sich in einem Übergabeabschnitt, in welchem eine vertikale Übergabebewegung stattfindet, seitlich über den Kettenumlauf mit den Auflagestegen erstrecken.

Durch die erfindungsgemäße Vorrichtung wird erreicht, daß beim Auflaufen der Tablare auf den Kettenförderer infolge der vertikalen Übergabebewegung die Auflagestege durch die Schlitze des Tablarbodens nach oben bewegt werden und dabei das Fördergut in eine Höhe oberhalb der Kanten der Ränder der Tablare anheben, so daß das Fördergut in dieser abgehobenen Stellung problemlos seitlich abgenommen werden kann. Umgekehrt wird in der Beladestation das Fördergut auf die Auflagestege gegeben, die dann nach unten durch die Schlitze der Tablare wieder herausbewegt werden, so daß das Fördergut auf den Tablaren abgesetzt wird.

In einer ersten Ausführungsform kann dabei vorgesehen sein, daß die Übergabeabschnitte taktgesteuert anhebbar und absenkbar sind. Als besonders vorteilhaft hat sich jedoch eine zweite Ausführungsform erwiesen, bei der die Übergabeabschnitte der Förderstrecken bzw. bevorzugt des Kettenumlaufs nach unten unter einem flachen Winkel geneigt verlaufen, so daß die Oberkanten der Auflagestege an den Enden unter der Auflageebene der anschließenden Förderstrecken liegen.

Bei dieser Ausführungsform laufen die Tablare in ein und derselben Förderebene von der Förderstrecke auf den Kettenumlauf ein, wobei sie zunächst im Übergabeabschnitt noch seitlich von dem Riemen- oder Kettenförderer der Förderstrecke unterstützt werden. Gleichzeitig laufen unter einem sehr flachen Winkel von beispielsweise 3° die Auflagestege in die Schlitze ein und heben damit sehr gleichmäßig das auf den Tablaren angeordnete Fördergut nach oben ab bzw. senken es von der Aufgabestellung sehr flach und schonend auf den Tablarboden auf.

Bei geeignetem Fördergut (stabiler und glatter Boden) kann das Entladen und Beladen der Tablare während der Bewegung des Kettenumlaufs erfolgen, indem das Fördergut beim Beladen einfach seitlich von den Auflagestegen heruntergeschoben wird oder aber in der Beladestation von der Seite her auf die Kettenstege aufgeschoben wird. Ansonsten aber wird man den Kettenumlauf taktgesteuert immer wieder in der Tablar-Entladestation und entsprechend in der Tablar-Beladestation anhalten, um das Fördergut von den Auflagestegen abzunehmen bzw. auf diese aufzubringen, wozu in Ausgestaltung der Erfindung mit besonderem Vorteil Abnahme- und Aufsetzrechen vorgesehen sein können, die seitlich zwischen die Auflagestege einschiebbare und vertikal anhebbare Zinken aufweisen.

Schließlich liegt es auch noch im Rahmen der Erfindung, der Tablar-Entladestation und der Tablar-Beladestation einen vorzugsweise als Paternoster ausgebildeten Leertablarpuffer zwischenzuordnen, um die entladenen Tablare zwischenspeichern zu können und bei Bedarf dann auch wieder abrufen zu können, wenn in der Beladestation weniger Tablare benötigt werden, als in der Entladestation gerade entladen werden oder wenn umgekehrt in der Beladestation mehr Tablare gebraucht werden, als in der Entladestation entladen werden.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 eine schematische Darstellung eines Förder- und Lagersystems mit einer erfindungsgemäßen Tablar-Be- und -Entladevorrichtung,

Fig. 2 eine schematische perspektivische Ansicht der Entladestation mit einem Fördergutabnahmerechen,

Fig. 3 eine Seitenansicht des Übergabeabschnitts des Kettenumlaufs der Be- und Entladevorrichtung,

Fig. 4 eine schematische Ansicht eines als Paternoster ausgebildeten Leertablarpuffers,

Fig. 5 eine Aufsicht auf ein Tablar,

Fig. 6 einen Schnitt längs der Linie VI-VI in Fig. 5,

Fig. 7 eine vergrößerte Aufsicht auf den Kettenumlauf mit den Auflagestegen für das Fördergut,

Fig. 8 einen Längsschnitt längs der Linie VIII-VIII in Fig. 7, und

Fig. 9 einen Querschnitt längs der Linie IV-IV in Fig. 7.

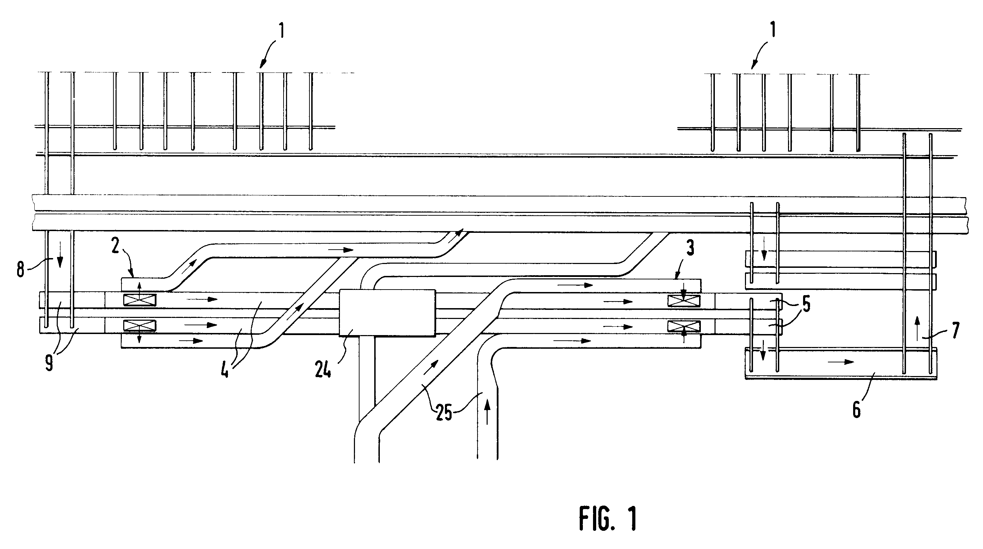

Das in Fig. 1 schematisch angedeutete Förder- und Lagersystem umfaßt ein nur schematisch angedeutetes Tablarlager 1 mit einer Tablar-Entladestation 2 und Tablar-Beladestation 3, die im dargestellten Ausführungsbeispiel durch eine zweisträngige Förderanlage mit jeweils einem taktgesteuerten Kettenumlauf 4 miteinander verbunden sind. In der Tablar-Beladestation 3 wird das von Förderbändern 25 von einer äußeren Wareneingangsstation ankommende Fördergut auf Leertablare verladen und über Förderstrecken 5, 6, 7 in das Lager 1 gebracht. Umgekehrt werden die aus dem Lager 1 abgerufenen beladenen Tablare über Förderstrecken 8, 9 der Tablar-Entladestation 2 zugeführt.

Ein die Tablar-Entladestation und die Tablar-Beladestation verbindender taktgesteuerter Kettenumlauf 4 umfaßt zwei seitliche Ketten 10, welche durch Auflagestege 11 miteinander verbunden sind, wobei diese Auflagestege im dargestellten Ausführungsbeispiel gewinkelt sind, so daß sie zwei Bogen 11a und 11b bilden. Die Tablare 12 sind mit einem flachen Boden 13 und umlaufenden Seitenwänden 14 und 15 versehen, wobei die stirnseitigen Seitenwände 15 unter Bildung von Transport- und Übergabehaken 16 abgewinkelt sind. Der Tablarboden ist mit einer Vielzahl von Schlitzen 17a und 17b versehen, die in ihrer Längsabmessung und in ihrem Abstand im wesentlichen der Anordnung der Auflagestege 11 entsprechen, die von unten her in diese Schlitze eingreifen können, um das auf dem Tablarboden liegende Fördergut beim Eindringen mit vom Tablarboden abzuheben und in eine vertikale Position oberhalb der Kanten 18 der Seitenwände 14, 15 zu bewegen, so daß das Fördergut dann sehr einfach zur Seite hin abgeschoben oder sonstwie abgenommen werden kann, was weiter unten noch im einzelnen beschrieben werden soll. Im Übergangsbereich zwischen der Förderstrecke 9 und dem Kettenumlauf 4 der Entladestation 2 sowie im Bereich zwischen dem Kettenumlauf 4 an der Tablar-Beladestation und der anschließenden Förderstrecke 5 ist eine vertikale Übergabebewegung vorgesehen, um die beladenen Tablare auf den Kettenumlauf zu bringen bzw. vom Kettenumlauf an die anschließende Förderstrecke weiterzugeben.

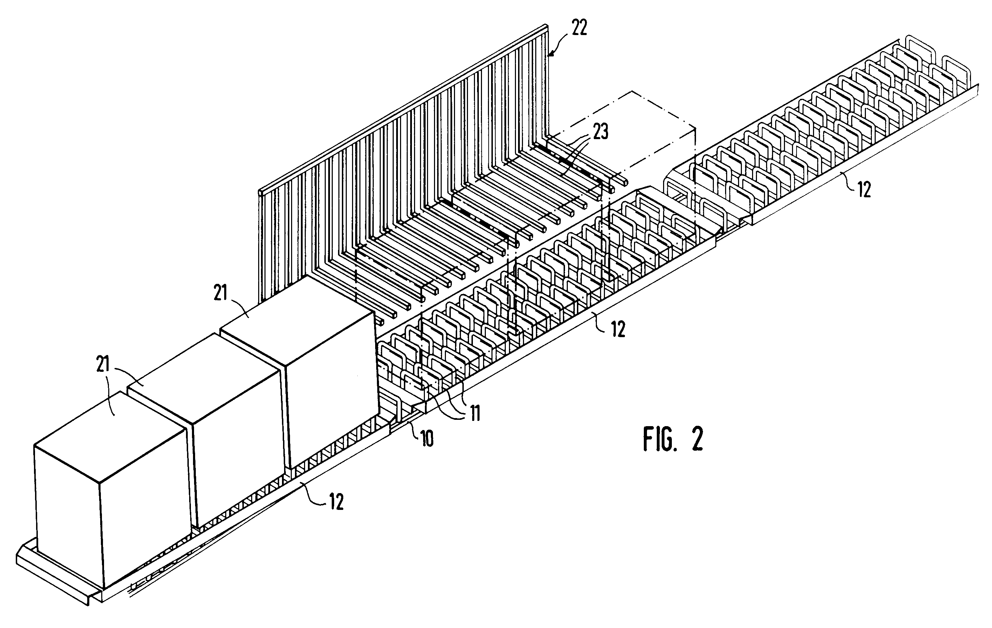

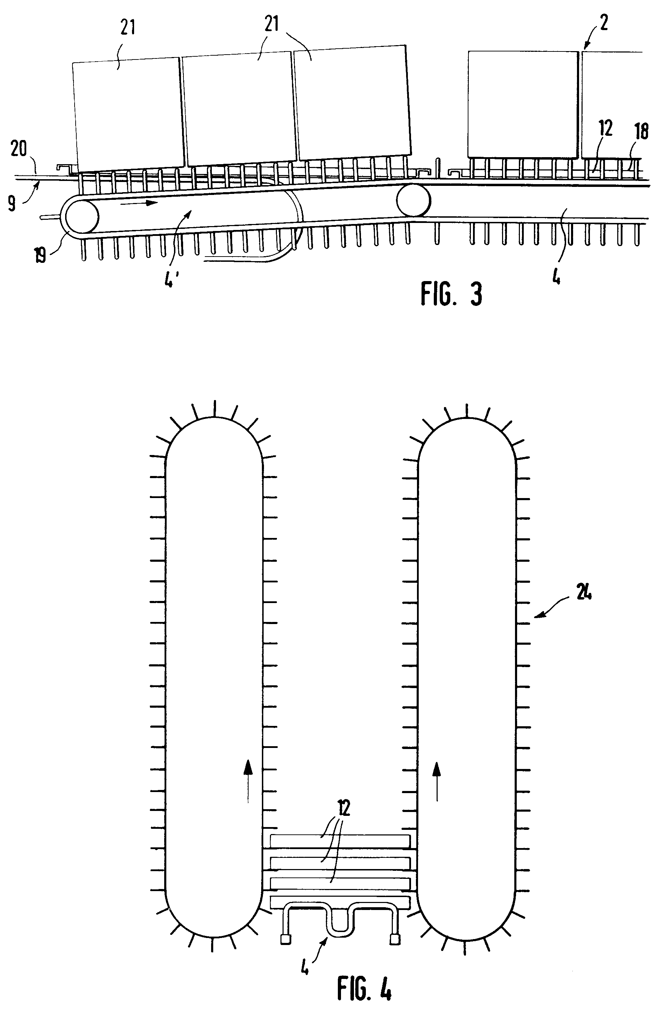

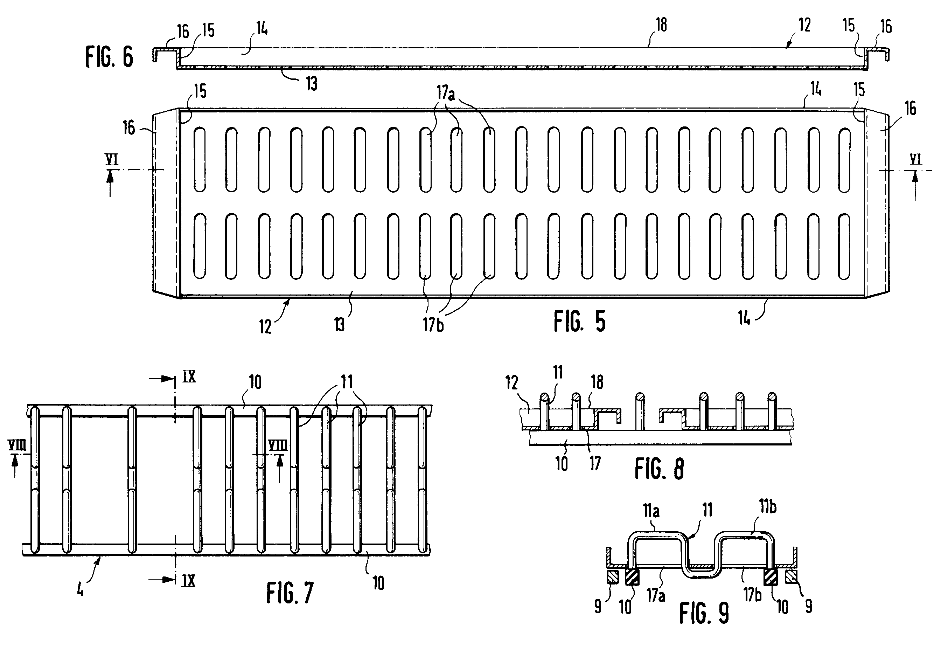

In Fig. 3 ist dieser Übergabeabschnitt im Bereich der Tablar-Entladestation 2 angedeutet. Der Übergabeabschnitt 4' am Ende des Kettenumlaufs 4 ist unter einem flachen Winkel von beispielsweise 3° schräg nach unten geneigt derart, daß am Ende 19 die Oberkanten der Auflagestege 11 unterhalb der Auflageebene 20 der anschließenden Förderstrecke 9 liegen, wobei die Förderstrecke 9 sich mit dem Kettenumlauf 4 teilweise überlappt. Dies ist sehr einfach dadurch möglich, daß die Förderstrecke 9 als Ketten- oder Gurtförderer ausgebildet ist (vergl. insbesondere Fig. 9), wobei diese Gurte seitlich neben den Ketten 10 des Kettenumlaufes 4 verlaufen. Zunächst werden also die ankommenden Tablare noch auf dem Gurtförderer 9 abgestützt, während langsam von unten her der ansteigende Kettenumlauf mit den Auflagestegen unter Durchdringung der Schlitze 17a, 17b der Tablarböden das Fördergut 21 vom Tablar abhebt, so daß es schließlich beim Ankommen in der eigentlichen Entladestation 2 oberhalb der Oberkanten 18 der Seitenwände der Tablare liegt (Fig. 3). In dieser Stellung kann nun das Fördergut 21 sehr einfach entweder zur Seite weggeschoben werden oder aber mit Hilfe eines Rechens 22 (Fig. 2) abgenommen werden, dessen waagrechte Aufnahmezinken 23 zwischen die Auflagestege 11 eingreifen und beim Anheben des Rechens das Fördergut von den Auflagestegen abheben, so daß es anschließend vom Rechen zur Seite auf einen Bearbeitungstisch oder eine andere Förderstrecke abgelegt werden kann. Entsprechend in umgekehrter Weise kann in der Tablar-Beladestation 3 das Fördergut wieder auf die oben über die Tablare überstehenden Auflagestege aufgesetzt werden. Anschließend neigt sich der Kettenumlauf entsprechend wieder nach unten, so daß die Auflagestege aus den Schlitzen nach unten herausgeführt werden und das Fördergut auf dem Tablarboden abgesetzt wird.

Zwischen der Tablar-Entladestation 2 und der Tablar-Beladestation 3 ist ein Leertablarpuffer 24 vorgesehen, der, wie es in Fig. 4 angedeutet ist, als Paternoster ausgebildet sein kann. Dieser paternosterartige Leertablarpuffer greift unter die entladenen Tablare und hebt diese sukzessive nach oben ab, um sie einstweilen zu speichern, bis sie wieder in der Tablar-Beladestation 3 benötigt werden.

**Patentansprüche**

**1.** Be- und Entladevorrichtung für im wesentlichen wannenförmige Tablare in Förder- und Lagersystemen, dadurch gekennzeichnet, daß die Tablar-Entladestation (2) und die Tablar-Beladestation (3) durch einen taktgesteuerten Kettenumlauf (4) mit, Schlitze (17a, 17b) des Tablarbodens durchsetzenden, die Seitenwände (14, 15) der Tablare (12) überragenden Auflagestegen (11) als Tablarträger verbunden sind, und daß die beidends an den Kettenumlauf (4) anschließenden, als Riemen- oder Kettenförderer (9)ausgebildeten und synchron mit dem Kettenumlauf (4) angetriebenen Förderstrecken (9, 5) sich in einem Übergabeabschnitt, in welchem eine vertikale Übergabebewegung stattfindet, seitlich über den Kettenumlauf (4) erstrecken.

2. Be- und Entladevorrichtung nach Anspruch 1, dadurch gekennzeichnet, daß die Übergabeabschnitte taktgesteuert anhebbar und absenkbar sind.

3. Be- und Entladevorrichtung nach Anspruch 1, dadurch gekennzeichnet, daß die Übergabeabschnitte der Förderstrecken (5, 9) bzw. bevorzugt die Übergabeabschnitte (4') des Kettenumlaufs (4) nach unten unter einem flachen Winkel geneigt verlaufen, so daß die Oberkanten der Auflagestege (11) an den Enden (19) des Kettenumlaufs (4) unter der Auflageebene (20) der anschließenden Förderstrecken (9, 5) liegen.

4. Be- und Entladevorrichtung nach einem der Ansprüche 1 bis 3, gekennzeichnet durch seitliche Auf- und Abschiebeinrichtungen für das von den Auflagestegen (11) von den Tablaren (12) abgehobene Fördergut (21).

5. Be- und Entladevorrichtung nach einem der Ansprüche 1 bis 3, gekennzeichnet durch Abnahme- und Aufsetzrechen (28) mit seitlich zwischen die Auflagestege (11) einschiebbaren und vertikal anhebbaren Zinken (23).

6. Be- und Entladevorrichtung nach einem der Ansprüche 1 bis 5, gekennzeichnet durch einen der Tablarentladestation (2) und Tablarentladestation (3) zwischengeordneten Leertablarpuffer (24).

7. Be- und Entladevorrichtung nach Anspruch 6, dadurch gekennzeichnet, daß der Leertablarpuffer (24) als Paternoster ausgebildet ist.

FIG. 1

FIG. 2

FIG. 3

FIG. 4

FIG. 6

16  15    14                                                    18              12    15  16

13

16  15                              17a                                    14  15  16

VI                                                                              VI

12    13        17b                                    FIG. 5              14

IX                    10              11

VIII        VIII

4        IX        FIG. 7              10

12    11    18

10    17    FIG. 8

11a    11    11b

9    10    17a    FIG. 9    17b    10    9

EP 0 496 992 A1

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 273 496 (GREGORY C. PAPALEXIS) | 1,2,5 | B65G1/00 |
| A | * das ganze Dokument * | 3 | B65G47/52 |
| | --- | | |
| A | US-A-3 108 679 (G. D. WOODY) | 1-3,5 | |
| | * das ganze Dokument * | | |
| | --- | | |
| A | EP-A-0 221 001 (SOGECAP S.A.) | 6,7 | |
| | * Ansprüche 1,3,4; Abbildungen * | | |
| | ----- | | |

RECHERCHIERTE SACHGEBIETE (Int. Cl.5 )

B65G
A21C
B65B

Der vorliegende Recherchenbericht wurde für alle Patentansprüche erstellt

| Recherchenort | Abschlußdatum der Recherche | Prüfer |
|---|---|---|
| DEN HAAG | 29 APRIL 1992 | VAN ROLLEGHEM F. |